# FASCICULE DE BREVET EUROPEEN

(11) **EP 1 130 957 B1**
(45) Date de publication et mention de la délivrance du brevet: **02.10.2002**
(21) Numéro de dépôt: 99956074.1
(22) Date de dépôt: 18.11.1999
(51) Int. Cl.: A01G 13/02

(54) **MATERIAU REFLECHISSANT LA LUMIERE SOLAIRE UTILISABLE DANS LE DOMAINE DE L'AGRICULTURE ET PROCEDE POUR SON OBTENTION**
SONNENLICHTREFLEKTIERENDES MATERIAL ZUR VERWENDUNG IN DER LANDWIRTSCHAFT UND VERFAHREN FÜR SEINE HERSTELLUNG
MATERIAL REFLECTING SUNLIGHT USEFUL IN AGRICULTURE AND METHOD FOR OBTAINING SAME

(30) Priorité: 19.11.1998 FR 9814740
(43) Date de publication de la demande: 12.09.2001
(73) Titulaire: MDB Texinov S.A., 38110 La Tour du Pin (FR); INSTITUT NATIONAL DE LA RECHERCHE AGRONOMIQUE (INRA), 75007 Paris Cédex 07 (FR)
(72) Inventeur: DUCOL, Jean-Pierre, Les Sauvages, 69170 Tarare (FR); ROBIN, Jean-Pierre, F-34080 Montpellier (FR); SAUVAGE, François, Xavier, F-34980 Saint Gely du Fesc (FR)
(74) Mandataire: Vuillermoz, Bruno
(86) Numéro de dépôt international: FR9902828
(87) Numéro de publication internationale: WO00030432

(56) Documents cités:
- DE-A- 2 828 445
- FR-A- 2 285 805
- FR-A- 2 733 665
- GB-A- 2 025 194
- US-A- 4 346 149
- US-A- 4 632 863
- US-A- 5 288 545

## Description

### Domaine Technique

La présente invention a trait à un nouveau matériau réfléchissant, utilisé dans le domaine agricole, mis au point en particulier pour la culture de la vigne selon la technique dite de « solarisation ». Un tel matériau peut cependant être utilisé pour toute autre plante ou tout type de culture lorsqu'un effet bénéfique d'un supplément énergétique peut s'avérer intéressant pour le producteur.

Elle concerne également un procédé permettant la réalisation d'un tel matériau réfléchissant.

### Techniques antérieures

Afin d'augmenter la quantité **et la qualité** de rayonnement solaire reçue par les plantes, plants de vignes notamment, pour améliorer la productivité et/ou la qualité, il a été proposé, comme cela ressort du FR-A-2 733 665, d'utiliser un matériau réfléchissant le rayonnement solaire.

Selon les enseignements de ce document, il est indiqué qu'un tel matériau doit remplir en plus les caractéristiques suivantes, prises isolément ou en combinaison
- résistance aux déchirures,
- perméabilité à l'air et à l'eau,
- souplesse permettant d'avoir une bonne adhérence au sol,
- faible oxydabilité et biodégradabilité afin qu'il ne soit pas polluant,
- faible altérabilité permettant de le réutiliser plusieurs années de suite.

Plus concrètement, il est indiqué qu'un tel matériau peut être constitué par exemple d'un film métallisé, d'un treillis de fibres réfléchissantes ou de supports en matière synthétique ou végétale comportant un revêtement réfléchissant que l'on dispose sur le sol de part et d'autre des pieds des plants à solariser, à une distance appropriée et recouvrant une surface au mètre carré, de part et d'autre des plants, fonction de la nature de ces derniers.

Si les propositions concernant la structure des matériaux permettant de remplir les conditions énoncées dans le brevet précité, peuvent permettre de remplir de telles conditions, elles impliquent cependant la mise au point de produits spécifiques.

Pari exemple, l'utilisation d'un film aluminium ou d'un film réfléchissant et d'aspect métallisé ou tout autre type de film réfléchissant, par exemple en polymère synthétique, présentera comme inconvénient de manquer de résistance et d'adhérence au sol et, par ailleurs, devra être adapté pour être perméable à l'air et à l'eau et pour bien adhérer au sol.

Si associer à un tel film, un support constitué d'une matière synthétique ou naturelle, peut permettre d'améliorer la résistance du film et d'adhérence au sol, se pose alors le problème de liaison des deux éléments du complexe et de son adaptation pour le rendre perméable à l'air et à l'eau.

Par suite, de nombreux essais et propositions ont été faits à ce jour pour obtenir de manière simple, économique, un matériau permettant de remplir l'ensemble de ces conditions.

Parmi ces propositions, la plus récente a été de proposer de substituer au film métallisé que l'on déroulait sur le sol de part et d'autre des plants, un matériau qui se présente sous la forme d'un tapis composé de lamelles produites à partir d'un film d'aluminium ou d'autre nature, lesdites lamelles ayant une largeur de deux à trois millimètres et étant maintenues à l'intérieur d'un réseau de fils, en polyéthylène ou autre matériau synthétique.

Un tel matériau permet, par réflexion, d'envoyer un minimum de 20 % de rayonnement solaire arrivant au sol sur les feuilles et les grappes de raisin, améliorant la qualité du raisin et du vin, et parfois même le rendement.

Il a également été constaté qu'une telle « solarisation ou énergisation » favorisait la résistance de la vigne vis-à-vis de parasites (champignon Botrytis notamment) et pouvait modifier le comportement dés insectes ravageurs ou propagateurs de maladies.

Il a cependant été constaté, lors d'essais, que ce type de tapis à base de lamelles d'aluminium, maintenues par un réseau de fils, présentait cependant un certain nombre d'inconvénients, par le fait que l'aluminium peut se dégrader dans le temps, que le maintien des bandes parallèlement les unes aux autres était délicat à réaliser et qu'elles pouvaient se déplacer et/ou se déformer, et qu'il était donc difficile de maîtriser le pouvoir réfléchissant.

### Exposé de l'invention

Or, on a trouvé, et c'est ce qui fait l'objet de la présente invention, un perfectionnement apporté au type de matériau précité constitué par une structure textile assurant le maintien de lamelles de films d'aluminium ou tout autre type de matière réfléchissante, juxtaposées côte à côte dans le sens de la largeur et qui permet de remplir parfaitement les conditions permettant la mise en oeuvre du procédé décrit dans le FR-2 733 665 par le fait qu'il est parfaitement stable, bloqué dimensionnellement tant en long qu'en large, qu'il présente une perméabilité à l'air et à l'eau régulière sur toute sa surface et surtout qu'il présente des caractéristiques de réflexion du rayonnement solaire parfaitement définies et qu'il ne s'altère pas dans le temps, notamment par oxydation de l'aluminium.

D'une manière générale, 1'invention concerne donc un perfectionnement apporté aux matériaux réfléchissants utilisés dans le domaine de la culture pour augmenter la quantité et la qualité du rayonnement solaire reçu par la plante, ledit revêtement étant constitué par une structure plane, de grande longueur par rapport à sa largeur, comportant des lamelles réfléchissantes, juxtaposées côte à côte dans le sens de la largeur et maintenues entre elles par un réseau de fils, et il se **caractérise** en ce que :
- ledit réseau est constitué par un tricot, réalisé sur un métier à tricoter à mailles jetées, à insertion frontale de trame, selon une armure de type filet à partir de trois nappes de fils de chaîne distribuées séparément aux aiguilles par l'intermédiaire de trois barres à passettes travaillant de manière telle que
   · les fils de la barre avant forment des colonnes de chaînettes parallèles espacées les unes des autres
   · les fils de la barre centrale forment des liaisons transversales, selon une séquence prédéterminée, entre deux colonnes de chaînettes chaque fil maillant en armure chaînette ou simplement tramant pendant ladite fréquence et;
   · les fils de la barre arrière sont distribués selon une armure tramée et lesdits fils soient positionnés de manière rectiligne dans le sens long dans la partie centrale des mailles ;
- les fils entrant dans la constitution dudit tricot support sont des monofilaments synthétiques ;
- les lamelles réfléchissantes sont tramées sur toute la largeur du tricot et sont emprisonnées dans chaque rangée de mailles en formant, entre deux colonnes consécutives de chaînettes, une pluralité de minifacettes réfléchissantes aléatoirement orientées.

Comme matière permettant de réaliser les lamelles réfléchissantes, on peut utiliser notamment un film d'aluminium ayant reçu un revêtement protecteur de surface ou tout autre type de matière réfléchissante tel que film à base de polymère synthétique métallisé ou non.

Selon une forme préférentielle de réalisation conforme à l'invention, les lamelles réfléchissantes sont de préférence colorées. Comme type de coloration, s'il peut être envisagé d'utiliser une coloration verte, il a été constaté qu'une coloration rouge était plus appropriée à améliorer encore les résultats.

Par ailleurs, les fils permettant la constitution du réseau assurant le maintien des lamelles réfléchissantes sont de préférence des fils synthétiques, et plus particulièrement des fils de polyéthylène colorés qui ont été traités pour présenter une grande résistance à l'action des rayons ultraviolets ainsi qu'aux intempéries.

La coloration tant des lamelles réfléchissantes que des fils constituant le réseau assurant le maintien desdites lamelles, permet de modifier les spectres de réflectance globale du matériau qui s'additionne aux spectres du film réfléchissant, film d'aluminium qui, comme dit précédemment, est également de préférence coloré.

A titre indicatif, une coloration dans le rouge permet une réflexion supplémentaire qui s'additionne aux spectres du film d'aluminium.

Il a été constaté que dans le cas de la vigne, la coloration rouge est plus efficace que toute autre coloration, verte par exemple.

Bien entendu, l'invention n'est pas limitée à une coloration rouge et il pourrait être envisagé d'utiliser des colorations différentes, voire même des couleurs fluorescentes ou génératrices d'ultraviolets.

Grâce à une telle sélection de moyens, certes connus par eux-mêmes si on les prend séparément, on obtient une structure réfléchissante qui présente, par rapport aux structures tramées ou tressées antérieures, les avantages suivants :
- le choix, comme réseau permettant d'assurer le maintien des bandelettes réfléchissantes parallèlement les unes aux autres, d'une structure tricotée de type filet, permet d'obtenir non seulement une parfaite résistance dans le sens longitudinal mais également dans le sens transversal compte tenu de la présence des jetées reliant deux colonnes successives de chaînettes ;
- le choix, d'un crin synthétique comme constituant de la structure du réseau de maintien, présente comme avantage d'obtenir une nappe qui, tout en étant enroulable, présente une très bonne « raideur » lorsqu'elle **est** mise sur le sol, la face envers présentant par ailleurs un effet de relief qui favorise l'accrochage audit sol ; de plus, l'utilisation d'un tel crin et non pas d'un fil multifilamentaire ou d'un filé de fibres, permet de maîtriser la surface couvrante du réseau de maintien par rapport à la surface totale des bandelettes réfléchissantes, cette surface couvrante étant, si l'on considère la face endroit du matériau, comprise entre 5% et 15 % et de 10% à 30% pour ce qui a trait à la face envers, le pourcentage de recouvrement étant lié essentiellement au diamètre des fils utilisés ;
- par ailleurs, si le matériau est en général posé sur le sol de telle sorte qu'il soit en contact avec ce dernier par sa face envers, il pourrait être envisagé, lorsque l'on souhaite diminuer l'effet de solarisation, de le positionner de telle sorte que la réflexion se fasse contre sa face envers ;
- l'insertion à l'intérieur de chaque maille des chaînettes permet par ailleurs d'obtenir automatiquement, sans aucune précaution ou adaptation particulière, un resserrement des bandes réfléchissantes au niveau de chaque maille, produisant une multiplicité de mini-facettes réfléchissantes améliorant la solarisation des plantes ;
- la perméabilité à l'air et à l'eau est obtenue automatiquement par l'espace minime qui subsiste entre deux lamelles consécutives ;
- enfin, la coloration du matériau constituant les bandes réfléchissantes et/ou des fils formant les mailles du réseau de maintien permet d'une part, d'agir spécifiquement sur la réponse physiologique du végétal et, d'autre part, éventuellement, au niveau esthétique, de mieux intégrer le matériau dans l'environnement de la culture.

Par ailleurs, le matériau conforme à l'invention comporte sur ses deux côtés des zones renforcées, l'enfilage du métier étant réalisé de manière à former deux bandes consécutives, espacées l'une de l'autre, dans lesquelles toutes les aiguilles sont alimentées en fil renforçant donc la structure à ce niveau permettant d'adapter facilement les moyens de fixation de la nappe sur le sol.

Pour réaliser un tel matériau, le procédé de tricotage, qui en soi est un procédé connu, est adapté pour que l'insertion des bandelettes réfléchissantes lors de l'opération de tricotage soit réalisée en les maintenant tendues et à plat lors de la présentation à l'ensemble des aiguilles pour leur incorporation dans une rangée du tricot en formation, la largeur desdites bandelettes étant légèrement supérieure à la longueur des mailles produites sur le métier, permettant d'obtenir une contrainte à ce niveau les resserrant latéralement lors de la formation des mailles, entraînant ainsi la production automatique de minifacettes réfléchissantes à la surface des zones visibles situées entre deux chaînettes consécutives et le blocage desdites bandelettes.

Lors de son utilisation, le matériau peut être positionné sur le sol de telle sorte que sa face envers comportant les jetées sous plusieurs aiguilles et l'envers des colonnes de chaînettes qui forment un relief, soit positionnée en regard du sol, ce qui améliore la stabilité sur ce dernier, limite les glissements et la formation de plis.

Les fils entrant dans la constitution du filet tricoté assurant le maintien des bandelettes réfléchissantes seront de préférence des crins synthétiques colorés, en polyéthylène notamment, dont le titre sera avantageusement compris entre 300 dtex et 600 dtex, un titre inférieur à 300 dtex conduisant à une structure trop souple, manquant de résistance, et un titre supérieur à 600 dtex conduisant à une structure présentant trop de rigidité et diminuant la surface réfléchissante des bandelettes.

II pourrait cependant être envisagé, pour des applications spécifiques, d'utiliser des fils plus fins ou plus gros que la fourchette précitée, notamment lorsque l'on souhaite faire varier le rapport entre la surface occupée par lesdits fils et la surface des bandelettes réfléchissantes.

Les bandelettes réfléchissantes seront de préférence réalisées à partir d'un film d'aluminium pur, comportant un revêtement de protection de surface constitué, par exemple, par un film transparent ou de préférence coloré rapporté sur chaque face, voire même sur une face seulement.

Il pourrait cependant être envisagé d'utiliser tout autre type de matériau réfléchissant sans sortir du cadre de l'invention.

Ces bandelettes auront une largeur en général comprise entre un et cinq millimètres, de préférence entre deux et trois millimètres.

Le filet tricoté conforme à l'invention comportera, dans le sens longitudinal, des chaînettes parallèles qui recouvrent d'une part le fil rectiligne incorporé lors du tricotage et qui ne maille pas et, d'autre part, le fil permettant la formation des liaisons transversales et qui peut ou non mailler au niveau des chaînettes.

L'espace entre deux chaînettes consécutives peut être adapté sur le métier en fonction de l'enfilage et, en général, cet espace est compris entre 0,5 et 1,5 cm et plus particulièrement de l'ordre de un centimètre.

La largeur des bandelettes transversales insérées à l'intérieur des mailles sera de préférence légèrement supérieure à la longueur desdites mailles afin d'obtenir la contrainte à ce niveau permettant de réaliser des minifacettes réfléchissantes sur le produit ainsi qu'un blocage parfait des bandelettes transversales qui ne peuvent pas glisser à l'intérieur desdites mailles.

L'invention et les avantages qu'elle apporte seront cependant mieux compris grâce à l'exemple de réalisation donné ci-après à titre indicatif, mais non limitatif, et qui est illustré par les schémas annexés.

### Description sommaire des dessins

Les dessins annexés illustrent une forme de réalisation d'un matériau conforme à l'invention :
- la figure 1 étant une représentation schématique en perspective d'un matériau conforme à l'invention ;
- la figure 2 étant une représentation graphique conventionnelle d'une armure de tricot assurant le maintien des bandelettes réfléchissantes ;
- la figure 3 illustre schématiquement le positionnement du fil rectiligne incorporé à l'intérieur des chaînettes ;
- la figure 4 étant une reproduction d'un matériau réalisé conformément à l'invention montrant plus particulièrement la zone centrale dudit matériau et les lisières renforcées qu'il comporte et ;
- la figure 5 étant une vue schématique illustrant la réflexion du rayonnement solaire contre la surface d'un matériau conforme à l'invention.

### Manière de réaliser l'invention

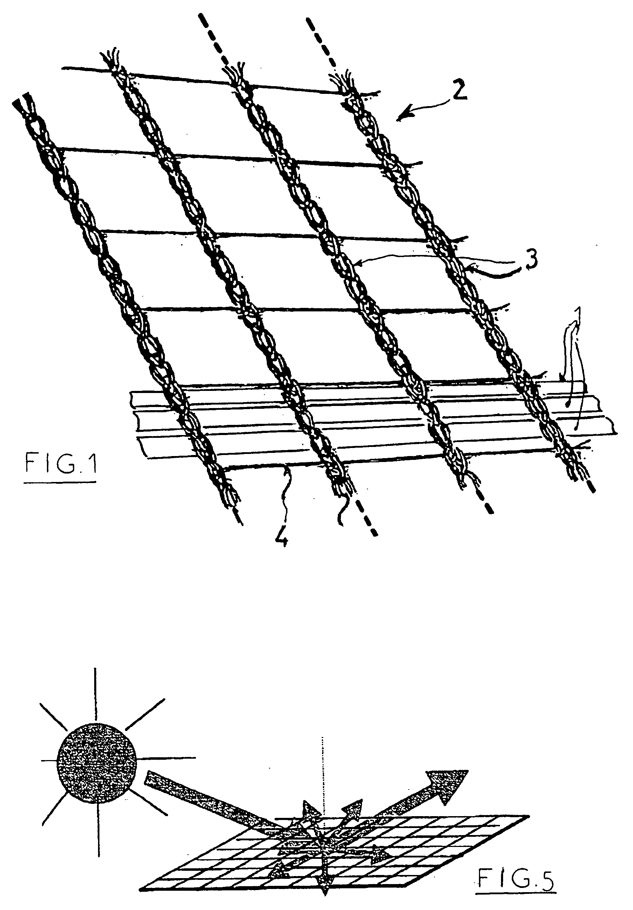

En se reportant plus particulièrement aux figures 1 à 3 annexées, le matériau conforme à l'invention est donc constitué par une structure plane, de grande longueur par rapport à sa largeur, qui comporte des lamelles réfléchissantes (1), juxtaposées côte à côte dans le sens de la largeur et maintenues entre elles par un réseau de fils, désigné par la référence générale (2), trois lamelles seulement étant représentées à la figure 1.

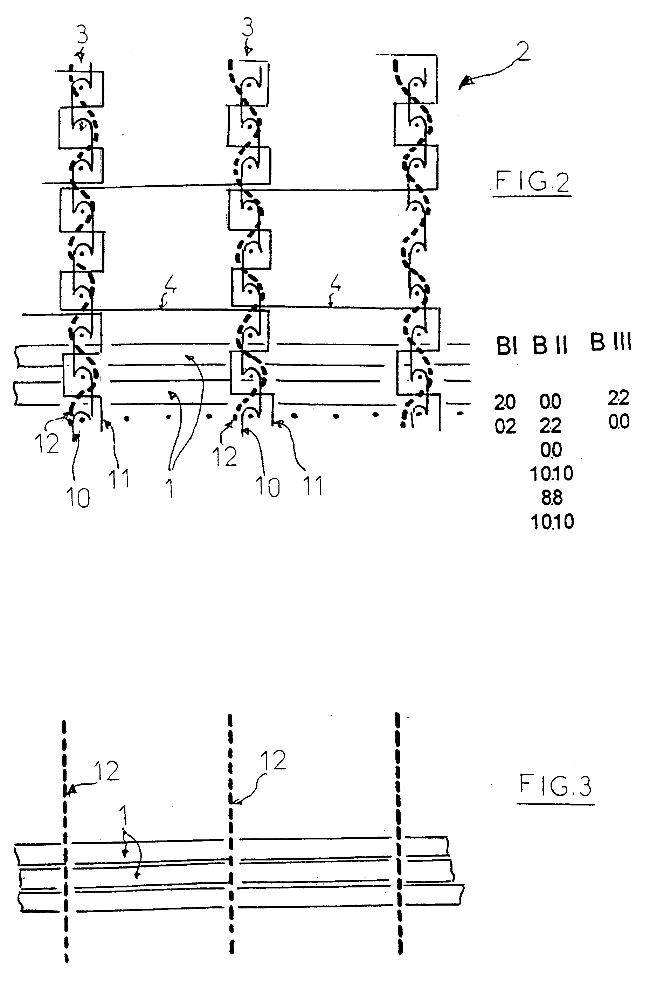

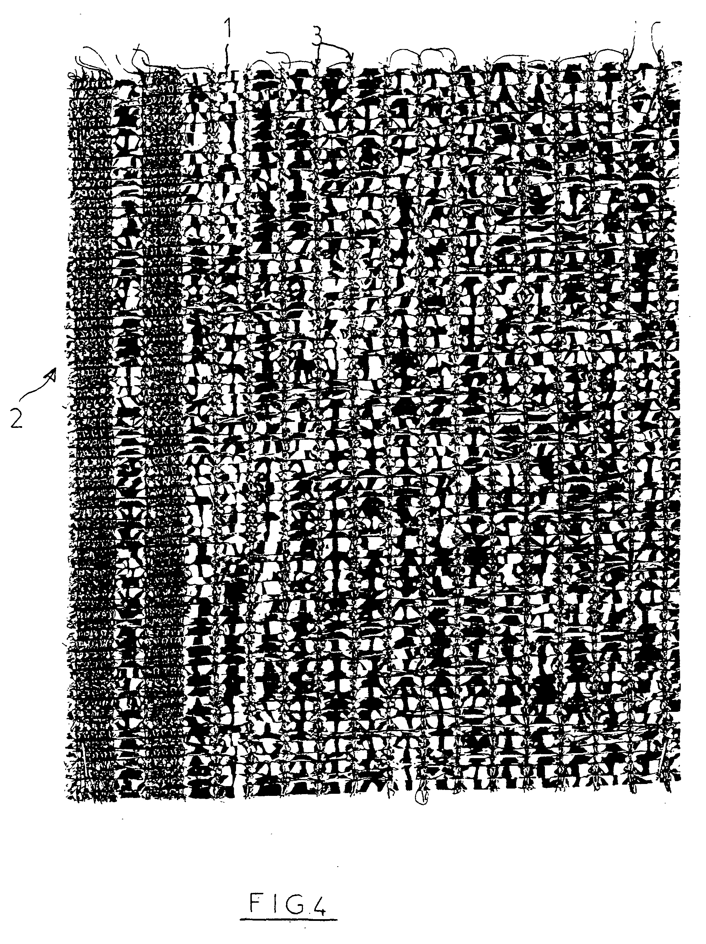

Conformément à l'invention, le réseau de fils (2) dont la structure générale ressort des figures 2, 3 et 4, est constitué par un tricot, réalisé sur un métier à tricoter à mailles jetées à insertion frontale de trame, et ce selon une armure filet, c'est-à-dire une armure qui permet d'obtenir une structure constituée de colonnes de mailles (3) espacées les unes des autres et reliées entre elles, à intervalles réguliers, par des fils transversaux (4).

L'espacement entre deux colonnes de mailles (3) sera déterminé en fonction des caractéristiques mécaniques, résistance à la traction notamment, que l'on souhaite conférer au matériau, et également de manière à affecter au minimum le pouvoir de réflexion des bandelettes d'aluminium, la face endroit du produit étant plus réfléchissante que la face envers qui comporte des jetées sous une ou plusieurs aiguilles permettant la formation de liaisons transversales.

Pour réaliser une telle structure, on utilise un métier à tricoter comportant au moins trois barres à passettes de distribution des fils aux aiguilles du métier qui sont alimentées en fil selon une séquence prédéterminée en fonction de l'espacement que l'on souhaite avoir entre deux colonnes de mailles (3).

L'espacement entre deux colonnes de mailles (3) est obtenu en déjaugeant le métier, c'est-à-dire en éliminant un certain nombre d'aiguilles, par exemple deux sur trois ou trois sur quatre, les barres de distribution des fils de chaîne étant quant à elles, enfilées de manière à ce que des vides subsistent entre deux passettes alimentées en fil, par exemple passettes alimentées tous les deux, trois ou quatre si le métier est déjaugé de deux, trois ou quatre fois.

En se reportant à la figure 2, la barre avant (BI) du métier qui distribue le fil (10) travaille selon une armure chaînette selon le rythme 0.2/2.0.

La barre centrale (BII) est, quant à elle, alimentée à partir du fil (11) destiné à former les liaisons transversales. Cette barre, distribue le fil (11) selon une séquence prédéterminée, selon laquelle il forme des mailles ou de simples jetées sur une aiguille selon une armure 2.0/0.2 ou 0.0/2.2 sur un nombre prédéterminé de rangées, pour réaliser une séquence similaire, mais de manière décalée par une longue jetée sous (4), sur une colonne de mailles parallèles. Cette structure permet donc de conférer non seulement la résistance transversale à l'article produit, mais également une grande résistance au déchirement.

Pour améliorer la résistance dans le sens de la longueur et surtout maîtriser le resserrement des lamelles réfléchissantes permettant, après réalisation, d'obtenir une pluralité de minifacettes aléatoirement orientées, on incorpore, à l'intérieur de chaque rangée de chaînettes et ce au moyen de la barre arrière (BIII), un troisième fil (12) représenté en pointillés, travaillant selon l'armure 0.0/2.2, c'est-à-dire qu'il ne forme pas de maille, et se trouve simplement emprisonné à l'intérieur des mailles de chaînettes et positionné de manière rectiligne après formation du tricot (figure 3).

L'insertion de chaque bandelette réfléchissante (1) à l'intérieur de chaque rangée de mailles du tricot, est réalisée au moyen d'un ensemble de présentation l'amenant à plat, sous tension, contre l'ensemble des fils de chaîne, après la phase d'abattage.

Par suite, lesdites bandelettes sont insérées à l'intérieur de chaque rangée de mailles et maintenues parfaitement par ces dernières. Par réglage de la longueur des mailles, on provoque un resserrement plus ou moins important de la bandelette qui non seulement permet d'assurer un maintien parfait de cette dernière, mais également provoque la formation à sa surface d'une pluralité de minifacettes réfléchissantes qui sont aléatoirement orientées.

Dans les zones du tricot comportant les jetées sous plusieurs aiguilles, les bandelettes recouvrent la jetée sous du fil (11) qui s'étend transversalement et qui relie deux colonnes (3) consécutives ou plus.

On obtient donc une structure dont la face endroit comporte une pluralité de bandelettes réfléchissantes (1) maintenues à l'intérieur des mailles des colonnes (3) qui sont constituées par des fils (10) de chaînettes associés à un fil longitudinal (12) maintenu sensiblement de manière rectiligne à l'intérieur de ladite colonne de chaînettes.

Les liaisons transversales qui sont constituées par les jetées sous plusieurs aiguilles (4) de la barre centrale distribuant le fil (11) sont, quant à elles, positionnées sur la face envers de la structure, ledit fil (11) pouvant être simplement tramé ou éventuellement maillé avec chaque chaînette.

### Exemple

On réalise un article conforme à l'invention sur un métier à tricoter à insertion frontale de trame de la Société *KARL MAYER* ayant une jauge d'origine de 12 (c'est-à-dire 12 aiguilles dans 25,4 mm).

Pour réaliser l'article conforme à l'invention, ce métier est déjaugé pour ne conserver qu'une aiguille sur quatre.

Les barres à passettes de ce métier sont alimentées avec un fil monobrins de 0,28 mm de diamètre (600 dtex) en polyéthylène coloré, en rouge ou vert - le rouge étant plus particulièrement adapté dans le cas de la culture de la vigne -, et ce selon une disposition telle que représentée à la figure 2, c'est-à-dire à raison de un plein pour quatre vides.

Sur les parties latérales du tricot (voir figure 3), l'enfilage est réalisé de manière à ce que l'on forme deux bandes de tricot plein, les douze passettes latérales étant enfilées à raison de quatre pleins, quatre vides, quatre pleins, quatre aiguilles du métier étant éliminées entre les deux zones où est réalisé le tricot. Cette zone ainsi renforcée sert à la fixation mécanique du matériau sur le sol.

L'armure de tricotage est la suivante.

La barre avant (BI) travaille selon une armure chaînette de type 0.2/2.0.

La barre centrale (BII), permet, quant à elle, de réaliser les liaisons transversales (4) et comporte donc une séquence, dans le cas présent sur quatre rangées, d'une armure tramée sur une aiguille 0.0/2.2 suivie d'une séquence obtenue par une longue jetée sous par exemple 10.10/12.12, ce qui permet la formation des liaisons transversales (4).

Eventuellement, les fils (11) de cette barre pourraient mailler avec les fils (10) de chaînette.

La barre arrière (BIII), quant à elle, permet de distribuer un troisième fil (12) selon une armure 0.0/2.2, c'est-à-dire qu'il ne forme pas de maille et se trouve simplement enserré à l'intérieur des fils (11) de chaînette.

On insère dans chaque rangée de mailles des bandelettes réfléchissantes (1), ayant une largeur de 3 mm obtenues par un film d'aluminium comportant un revêtement de protection qui n'affecte pas le pouvoir réfléchissant dudit film d'aluminium.

Le métier est réglé pour qu'une maille ait une longueur de 2 mm.

En procédant d'une telle manière, on obtient donc un léger resserrement des bandelettes au niveau de leur emprisonnement à l'intérieur de la maille, ce qui entraîne la formation d'une multiplicité de mini-facettes réfléchissantes à la surface du produit obtenu par cette déformation.

A la tombée du métier, on obtient un produit dans lequel les bandelettes (1) sont maintenues côte à côte, à l'intérieur des colonnes de mailles constituées par les chaînettes de fils espacées entre elles d'un distance de 0,8 cm, les liaisons transversales (4) obtenues par les jetées étant également à une distance les unes des autres de 0,8 cm.

Un tel produit est pratiquement indéformable tant dans le sens long que dans le sens large et est particulièrement adapté pour être utilisé dans les différents domaines de l'agriculture ou de la culture de plantes - notamment légumes, arbres fruitiers, vigne... - pour augmenter la quantité de rayonnement solaire reçue par la plante et pour en modifier la composition.

Par ailleurs, un tel matériau est facile à poser et à fixer sur le sol compte tenu de ses lisières renforcées, est léger (dans l'exemple précédent, il pèse 160 g/m2), est perméable à la pluie puisque même si les bandelettes sont maintenues côte à côte, un léger espace subsiste entre deux bandelettes consécutives du fait de l'utilisation d'une structure tricotée pour assurer leur maintien. Ce matériau est cependant suffisamment dense pour entraver le développement des mauvaises herbes et limiter ainsi les traitements chimiques de déserbage.

Enfin, et cela ressort de la figure 5, par rapport à une surface réfléchissante plane tel qu'un film, le fait que le matériau conforme à l'invention présente en surface une multiplicité de facettes aléatoirement orientées, cela permet d'obtenir de multiples réflexions spéculaires multidirectionnelles permettant de mieux disperser la lumière incidente, effet améliorant l'action sur la plante et permettant d'avoir un éclairement plus important sur les parties inférieures du végétal, et ce malgré la variation des angles d'incidence de ladite lumière entre 0 et 180° en fonction du parcours du soleil au cours de la journée.

## Revendications

1. Matériau réfléchissant utilisable dans le domaine de la culture pour augmenter la quantité de rayonnement solaire reçu par la plante ou pour en modifier la qualité, ledit revêtement étant constitué par une structure plane, de grande longueur par rapport à sa largeur, comportant des lamelles réfléchissantes (1), juxtaposées côte à côte dans le sens de la largeur et maintenues entre elles par un réseau de fil (2), **caractérisé en ce que** :
- ledit réseau (2) est constitué par un tricot, réalisé sur un métier à tricoter à mailles jetées, à insertion frontale de trame, selon une armure de type filet à partir de trois nappes de fils de chaîne (10,11,12) distribuées séparément aux aiguilles par l'intermédiaire de trois barres à passettes (BI,BII,BIII) travaillant de manière telle que:
. les fils (10) de la barre avant (BI), forment des colonnes de chaînettes parallèles espacées les unes des autres ;
. les fils (11) de la barre centrale (BII) forment des liaisons transversales (4), selon une séquence prédéterminée, entre deux colonnes de chaînettes (3), chaque fil (11) maillant- en armure chaînette ou simplement tramant pendant ladite séquence et;
. les fils (12) de la barre arrière (BIII) sont distribués selon une armure tramée et sont positionnés de manière rectiligne dans le sens long dans la partie centrale des mailles ;
- les fils (10,11,12) entrant dans la constitution dudit tricot support sont des monofilaments synthétiques ;
- les lamelles réfléchissantes (1) sont tramées sur toute la largeur du tricot et sont emprisonnées dans chaque rangée de mailles en formant, entre deux colonnes consécutives de chaînettes, une pluralité de minifacettes réfléchissantes aléatoirement orientées.

2. Matériau selon la revendication 1, **caractérisé en ce que** les lamelles réfléchissantes (1) et/ou les fils constituant le réseau de liaison (2) sont colorées.

3. Matériau selon la revendication 2, **caractérisé en ce que** la coloration est rouge.

4. Matériau selon l'une des revendications 1 à 3, **caractérisé en ce que** les lamelles réfléchissantes (1) sont à base d'un film d'aluminium ayant un revêtement de protection de surface coloré ou non.

5. Matériau selon l'une des revendications 1 à 4, **caractérisé en ce que** les fils (10,11,12) constituant le réseau de liaison des lamelles réfléchissantes sont des crins en polyéthylène coloré ou non.

6. Matériau selon l'une des revendications 1 à 5, **caractérisé en ce qu'**il comporte sur ses deux côtés des zones renforcées, l'enfilage du métier étant réalisé de manière à former deux bandes consécutives, espacées l'une de l'autre, dans lesquelles toutes les aiguilles sont alimentées en fil renforçant donc la structure à ce niveau permettant d'adapter facilement les moyens de fixation de la nappe sur le sol.

7. Procédé pour 1a réalisation d'un matériau réfléchissant selon l'une des revendications 1 à 6, **caractérisé en ce que** l'insertion des bandelettes (1) réfléchissantes lors de l'opération de tricotage est réalisée en les maintenant tendues et à plat lors de la présentation à l'ensemble des aiguilles pour leur incorporation dans une rangée de tricot en formation, la largeur desdites bandelettes étant légèrement supérieure à la longueur des mailles produites sur le métier permettant d'obtenir une contrainte à ce niveau, les resserrant latéralement lors de la formation des mailles, entraînant la formation des minifacettes réfléchissantes à la surface des zones visibles situées entre deux chaînettes consécutives et le blocage desdites bandelettes.

8. Utilisation d'un matériau selon l'une des revendications 1 à 6, **caractérisé en ce qu'**il est positionné sur le sol de telle sorte que sa face comportant les jetées sous plusieurs aiguilles et l'envers des colonnes de chaînettes qui forment un relief sont positionnées en regard du sol, ce qui améliore la stabilité sur ce dernier, limite les glissements et la formation de plis.

## Patentansprüche

1. Reflektierendes Material, das auf dem Gebiet des Pflanzenanbaus einsetzbar ist, um die Quantität der von der Pflanze aufgenommenen Sonnenstrahlung zu erhöhen oder deren Qualität zu verändern, wobei die Beschichtung aus einer ebenen Struktur besteht, die eine große Länge im Verhältnis zur Breite aufweist, mit reflektierenden Lamellen (1), die Seite an Seite in der Breitenrichtung nebeneinander liegen und untereinander durch ein Netz (2) von Fäden zusammengehalten werden, **dadurch gekennzeichnet, dass**
- das Netz (2) aus einem Gewirk besteht, das auf einer Wirkmaschine mit Schlagmaschen mit vorderer Schussfadeneinführung gemäß einer netzartigen Bindung aus drei Kettgarngelegen (10, 11, 12) hergestellt wird, die getrennt mittels dreier Legeschienen (BI, BII, BIII) an die Nadeln verteilt werden, und die Legeschienen so arbeiten, dass:
• die Fäden (10) der vorderen Schiene (BI) Reihen von parallelen voneinander beabstandeten Kettfäden bilden,
• die Fäden (11) der mittleren Schiene (BII) nach einer vorbestimmten Abfolge Querverbindungen (4) zwischen zwei Kettfadenreihen bilden, wobei jeder Faden (11) in Kettfadenbindung oder einfach einschießend während der Abfolge Maschen bildet; und
• die Fäden (12) der hinteren Schiene (BIII) gemäß einer Schussfadenbindung verteilt sind und geradlinig in der Längsrichtung im mittleren Maschenteil positioniert sind;
- die Fäden (10, 11, 12), die in das Gefüge des Trägergewirks eingehen, synthetische Endlosfäden sind;
- die reflektierenden Lamellen (1) über die ganze Breite des Gewirks eingeschossen werden und in jeder Maschenreihe eingeschlossen werden, indem sie zwischen zwei aufeinanderfolgenden Kettfadenreihen eine Mehrzahl an reflektierenden, zufällig ausgerichteten Kleinflächen bilden.

2. Material nach Anspruch 1, **dadurch gekennzeichnet, dass** die reflektierenden Lamellen (1) und/oder die Fäden, die das Verbindungsnetz (2) bilden, gefärbt sind.

3. Material nach Anspruch 2, **dadurch gekennzeichnet, dass** die Färbung rot ist.

4. Material nach einem der Ansprüche 1 bis 3, **dadurch gekennzeichnet, dass** die reflektierenden Lamellen (1) auf der Basis einer Aluminiumfolie sind, die einen gefärbten oder ungefärbten Oberflächenschutzüberzug aufweist.

5. Material nach einem der Ansprüche 1 bis 4, **dadurch gekennzeichnet, dass** die Fäden (10, 11, 12), die das Verbindungsnetz der reflektierenden Lamellen bilden, Haare aus gefärbtem oder ungefärbtem Polyethylen sind.

6. Material nach einem der Ansprüche 1 bis 5, **dadurch gekennzeichnet, dass** es auf seinen beiden Seiten verstärkte Bereiche umfasst, wobei die Bespannung der Wirkmaschine so ausgeführt ist, **dass** zwei voneinander beabstandete aufeinanderfolgende Bänder ausgebildet werden, bei denen alle Nadeln mit verstärkendem Faden beschickt werden, und wobei die Struktur es hier ermöglicht, die Mittel zur Befestigung des Geleges am Boden auf einfache Weise anzupassen.

7. Verfahren zur Herstellung eines reflektierenden Materials nach einem der Ansprüche 1 bis 6, **dadurch gekennzeichnet, dass** das Einschiessen der reflektierenden Folienbändchen (1) beim Wirkvorgang so erfolgt, **dass** sie bei der Übergabe an die Nadelgruppe gespannt und flach gehalten werden, um in eine sich bildende Wirkreihe eingebaut zu werden, wobei die Breite dieser Folienbändchen etwas größer ist als die Längen der auf der Wirkmaschine hergestellten Maschen, wodurch dort eine Beaufschlagung erzielt werden kann, die sie bei der Ausbildung der Maschen seitlich zusammenzieht, was eine Ausbildung von reflektierenden Miniflächen auf der Oberfläche der sichtbaren Bereiche zwischen zwei aufeinanderfolgenden Kettfäden und das Festsetzen dieser Folienbändchen mit sich bringt.

8. Verwendung eines Materials nach einem der Ansprüche 1 bis 6, **dadurch gekennzeichnet, dass** es so auf dem Boden angeordnet wird, dass seine Fläche mit den Schlägen unter mehreren Nadeln und die Rückseite der Kettreihen, die ein Relief bilden, dem Boden zugewandt angeordnet sind, was die Stabilität auf diesem verbessert und Verrutschungen und Faltenbildung einschränkt.

## Claims

1. A reflecting material that can be used in the field of cultivation in order to increase the amount of solar radiation received by plants or to modify the quality of the solar radiation, said covering consisting of a plane structure, of great length compared with its width, comprising reflecting slats (1) juxtaposed side by side in the width direction and held together by a yarn network (2), **characterized in that**:
- said network (2) consists of a knitted fabric, made on a warp knitting machine with frontal weft insertion, in a net-type pattern from three plies of warp yarns (10, 11, 12) distributed separately to the needles by means of three guide bars (BI, BII, BIII) working in such a way that:
. the yarns (10) of the front bar (BI) form parallel spaced-apart wales of chain stitches;
. the yarns (11) of the central bar (BII) form transverse links (4) in a predetermined sequence between two wales (3) of chain stitches, each yarn (11) meshing in a chain stitch pattern or simply being weft-inserted during said sequence; and
. the yarns (12) of the rear bar (BIII) are distributed in a weft pattern and are positioned in a straight manner in the longitudinal direction in the central part of the loops;
- the yarns (10, 11, 12) used in the construction of said knitted support fabric are synthetic monofilaments;
- the reflecting slats (1) are weft-inserted over the entire width of the knitted fabric and are held captive in each course of loops, forming, between two consecutive wales of chain stitches, a plurality of randomly oriented reflecting minifacets.

2. The material as claimed in claim 1, **characterized in that** the reflecting slats (1) and/or the yarns constituting the linking network (2) are colored.

3. The material as claimed in claim 2, **characterized in that** the coloring is red.

4. The material as claimed in one of claims 1 to 3, **characterized in that** the reflecting slats (1) are based on an aluminum film having a colored or colorless protective surface coating.

5. The material as claimed in one of claims 1 to 4, **characterized in that** the yarns (10, 11, 12) constituting the network for linking the reflecting slats are colored or colorless polyethylene filaments.

6. The material as claimed in one of claims 1 to 5, **characterized in that** it has, on both its sides, reinforced regions, the knitting machine being threaded up so as to form two consecutive spaced-apart bands in which all the needles are fed with reinforcing yarn, the structure therefore at this point making it possible to easily adapt the means for securing the sheet to the soil.

7. A process for producing a reflecting material as claimed in one of claims 1 to 6, **characterized in that** the reflecting strips (1) are inserted during the knitting operation by keeping them under tension and held flat during presentation to the set of needles in order to incorporate them into a course of knitted fabric being formed, the width of said strips being slightly greater than the length of the loops produced on the knitting machine allowing a stress to be produced thereat, pinching them laterally during formation of the loops and resulting in the formation of reflecting minifacets at the surface of the visible regions located between two consecutive chain stitches and the immobilization of said strips.

8. The use of a material as claimed in one of claims 1 to 6, **characterized in that** it is positioned on the soil in such a way that its comprising the multi-needle underlaps and the reverse side of the wales of chain stitches which form a relief are positioned facing the soil, thereby improving the stability on the latter, limiting slippage and the formation of wrinkles.
